# EUROPÄISCHE PATENTSCHRIFT

(11) **EP 2 653 839 B1**
(45) Veröffentlichungstag und Bekanntmachung des Hinweises auf die Patenterteilung: **10.06.2015**
(21) Anmeldenummer: 12164834.9
(22) Anmeldetag: 19.04.2012
(51) Int. Cl.: G01D 11/24

(54) **Sensor mit von einem Hotmelt umgebenen Elektronikkomponenten**
Sensor with electronics components surrounded by a hotmelt
Capteur avec composants électroniques enveloppés par fusion à chaud

(43) Veröffentlichungstag der Anmeldung: 23.10.2013
(73) Patentinhaber: SICK AG, 79183 Waldkirch (DE)
(72) Erfinder: Neuhäuser, Torsten, 79353 Bahlingen (DE); Greger, Dr. Walter, 79111 Freiburg (DE)
(74) Vertreter: Hehl, Ulrich

(56) Entgegenhaltungen:
- DE-A1- 19 504 608
- DE-B4- 10 121 776
- US-A1- 2004 080 314

## Beschreibung

Die Erfindung betrifft einen Sensor mit Elektronikkomponenten, die von einem Hotmelt umgeben sind sowie ein Herstellungsverfahren nach dem Oberbegriff von Anspruch 1 beziehungsweise 10.

Magnetfeldsensoren können unter anderem zur genauen Positionsbestimmung verwendet werden. Eine beispielhafte Anwendung ist das berührungslose Erfassen der Stellung von Pneumatik- oder Hydraulikkolben innerhalb eines Arbeitszylinders. Dabei werden die Sensoren in eine Nut des Arbeitszylinders eingesetzt und haben dementsprechend eine an die Nut angepasste Au ßengeometrie. Damit sind für solche Anwendungen die maximalen Abmessungen eines Sensors durch die Nutgeometrie vorgegeben. Ein derartiger Magnetfeldsensor ist aus der EP 2 068 127 B1 bekannt. Der Sensor wird axial verstellbar in der Führungsnut des Arbeitszylinders angeordnet. In einer gewünschten Position in Längsrichtung der Nut kann der Sensor durch Verdrehen eines drehbeweglichen Klemmteils befestigt werden.

Wegen der direkten Anordnung an dem Arbeitszylinder wachsen die Anforderungen an die Robustheit derartiger magnetischer Zylindersensoren. So werden IP-Schutzklassen teilweise bis IP68 und IP69K sowie eine chemische Beständigkeit beispielsweise gegenüber Schneidölen gewünscht. Durch die kompakte Bauform der Sensoren, die in den Nuten Platz finden müssen, kann nicht einfach das Gehäuse mit entsprechend widerstandsfähigen Wandstärken ausgebildet werden, weil dann nicht genügend Platz für die Elektronik im Gehäuseinneren verbleibt.

Zum Schutz der Elektronik sind thermoplastisch umspritzte und vergossene Sensoren bekannt. Thermoplastisch umspritzte Geräte bieten Vorteile in der Fertigung, weil unter Verwendung kostengünstiger Kunststoffe kein Aushärten eines Vergusses erforderlich ist und die Geometrien auch im Anschlussbereich des Sensors berücksichtigt werden. Es lässt sich prinzipiell eine hohe chemische und mechanische Widerstandsfähigkeit erreichen.

Wird allerdings die elektronische Baugruppe des Sensors direkt mit dem hochfesten Kunststoff umspritzt, kann es durch die hohen Temperaturen und Drücke zu Beschädigungen der Elektronik kommen. Außerdem wird die Elektronik durch die Temperaturwechsel stark belastet, was oft eine verringerte Lebensdauer nach sich zieht. Dies gilt besonders für hochempfindliche Reed-Schalter. Da die Elektronik in dem Spritzgusswerkzeug fixiert werden muss, ist in der Regel eine nachfolgende weitere Umspritzung erforderlich. Da weiterhin nur sehr wenig Bauraum zur Verfügung steht, können nur sehr kurze Kriechstrecken an den entstehenden Grenzflächen realisiert werden, und dies führt zu Leckagen. Hohe IP-Schutzklassen oberhalb von IP67 sind auf diese Weise nicht mehr erreichbar.

Bei der herkömmlichen Vergusstechnik andererseits wird der Innenraum eines Hülsengehäuses mit der Elektronik mit einem Epoxidharz ausgefüllt. Nachteilig hieran ist der prozesstechnische Aufwand, denn wegen der Luftverdrängung sind meist mehrere Füllschritte notwendig, und es müssen lange Aushärtzeiten bis zur Größenordnung von Tagen berücksichtigt werden. Bei einer kabelseitigen Befestigung des Sensors entstehen konzeptbedingt Leckagen im Haltebereich, aus denen das Vergussmaterial ausfließen kann. Da diese Art der kabelseitigen Halterung für die oben genannten Zylindersensoren ein häufig gewünschtes technisches Merkmal darstellt, werden Sensoren nur noch selten mit einem Epoxidverguss hergestellt. Ein Positionssensor und ein Verfahren zu dessen Herstellung mit einem derartigen Verguss sind beispielsweise aus der DE 195 04 608 A1 bekannt. Dabei wird eine Einheit aus einem Sensorelement, einer elektrischen Schaltung und einem Körper mit Anschlusskabeln in ein zylindrisches Gehäuse eingeführt. Anschließend werden sämtliche Hohlräume im Inneren des Gehäuses mittels einer Duroplast-Formmasse gefüllt.

Als eine Art Zwischenform wird das thermoplastische Füllen mit einem Hotmelt eingesetzt. Ein Hotmelt ist ein Werkstoff, der schon bei geringeren Temperaturen und Drücken verarbeitet werden kann und der deutlich weicher ist, als klassische Vergüsse. Dadurch bleibt die Belastung der Elektronik deutlich geringer. Wegen der thermoplastischen Verarbeitung werden auch lange Trocknungszeiten wie bei einem Epoxidharz vermieden.

Den prozesstechnischen Vorteilen stehen eine schlechte chemische Beständigkeit und eine geringe thermisch-mechanische Robustheit gegenüber, mit denen hohe IP-Schutzklassen nicht erreicht werden. Ein kabelseitiges Halterungskonzept kann wegen der geringen mechanischen Festigkeit nur schwer umgesetzt werden.

Im Stand der Technik ist bekannt, ein nach unten geöffnetes hochfestes Gehäuse zu verwenden, welches von unten mit Elektronik bestückt und dann mit Hotmelt gefüllt wird. Durch die einseitige Öffnung geht ein Teil der Gehäusefestigkeit verloren. Außerdem kommt das Hotmelt in der Anwendung unter Umständen mit kritischen Chemikalien in Kontakt, und dies führt zu einem Anlösen des Hotmelts und letztlich einem Versagen des Sensors.

Aus der DE 10 2004 044 614 B4 ist bekannt, Elektronikbauteile zunächst mit einem Hotmelt und dann in einem zweiten Schritt das Hotmelt mit einem herkömmlichen, spritzgussfähigen Kunststoff zu umspritzen. Dabei entsteht eine Mischzone aus Kunststoff und Hotmelt in deren Berührungsbereich. In einer Ausführungsform bildet die äußere Kunststoffschicht selbst das Gehäuse. In einer weiteren Ausführungsform ist noch ein weiteres Gehäuse vorgesehen, damit die Kunststoffschicht beim Umspritzen des Hotmelts dünn bleiben und somit schnell verarbeitet werden kann. Für einen Sensor in der einleitend genannten Baugröße, der in einer Nut von wenigen Millimetern untergebracht werden soll, ist dieses Vorgehen ungeeignet. Denn für den hochfesten Kunststoff verbliebe allenfalls eine Wandung von nur 0,3-0,4 mm. Bei der Umspritzung würden geringe Verformungen des weichen Hotmelt-Körpers zum Anlegen des Körpers an die Werkzeugwand führen. Diese Bereiche wären entsprechend unterfüllt.

In der DE 10 2008 024 551 A1 ist ein Verfahren zur Verkapselung von Bauteilen für die Photovoltaik beschrieben. Dabei wird eine Klebemasse auf Acrylathotmelt-Basis in einem foilenartigen Schichtaufbau verwendet.

Die DE 101 21 776 B4 zeigt einen Sensor mit einer Trägerplatte in einem im Spritzverfahren hergestellten Gehäuse. Dabei ist ein Hohlraum vorgesehen, in den die Trägerplatte sprungbrettartig hineinragt.

Es ist daher Aufgabe der Erfindung, ein alternatives Gehäusekonzept für einen Sensor anzugeben.

Diese Aufgabe wird durch einen Sensor mit Elektronikkomponenten, die von einem Hotmelt umgeben sind sowie ein Herstellungsverfahren nach Anspruch 1 beziehungsweise 10 gelöst. Dabei geht die Erfindung von dem Grundgedanken aus, das Verfüllen mit Hotmelt mit einem stabilen Gehäuse ohne Leckagen oder Öffnungsstellen zu kombinieren. Dazu wird die Elektronik zunächst mit einem Hotmelt umgeben. Die Elektronik bildet einen ersten Sensorteil. Der entstehende Vorspritzling wird dann in einen festen ersten Gehäuseteil eingesetzt. Ein zweiter Sensorteil, beispielsweise Bauteile wie ein Anschlussbereich für kabelseitige Befestigung, der mit der Elektronik verbunden ist, ist weniger empfindlich, muss daher nicht von dem Hotmelt umgeben sein und ist daher auch nicht in dem ersten Gehäuseteil angeordnet. Um das Gehäuse zu schließen, werden die Bauteile des zweiten Sensorteils in einem zweiten Gehäuseteil untergebracht, beispielsweise durch Umspritzen der Bauteile mit einem herkömmlichen Kunststoff. Dadurch entsteht insgesamt ein geschlossenes Gehäuse, wobei die Elektronikkomponenten von dem Hotmelt geschützt sind und das Hotmelt allenfalls partiell in einem Umspritzverfahren mit Kunststoff in Kontakt kommt. Obwohl das Gehäuse geschlossen ist, können auch Bauteile außerhalb angebracht sein, beispielsweise Befestigungsmittel, die für ein Werkzeug zugänglich bleiben sollen.

Das Hotmelt, auch als Schmelzklebstoff bezeichnet, weist die einleitend genannten Eigenschaften auf, die es für eine einfache, schonende Verarbeitung geeignet machen. Hinsichtlich der möglichen Zusammensetzung sind Hotmelts bekannt und werden hier deshalb nicht näher erläutert.

Die Erfindung hat den Vorteil, dass die für die Elektronik schonende Ummantelung mit einem Hotmelt mit der hohen Robustheit des Gehäuses kombiniert wird. Dabei gibt es keine kritischen Hotmelt-Grenzflächen nach außen hin. Die Elektronik wird durch einen weichen Hotmelt-Kern schon am Anfang der Produktionskette und damit insbesondere bei dem Spritzverfahren zur Herstellung des zweiten Gehäuseteils geschützt und bleibt dies auch gegenüber Temperaturschwankungen im späteren Betrieb. Hohe Robustheit, d. h. Dichtigkeit und chemische Beständigkeit, wird mit einer geringen mechanischen Belastung der Elektronik vereint. Der Sensor ist sowohl für eine kabelseitige Befestigung als auch für sehr geringe Gehäusewandstärken geeignet.

Die Elektronikkomponenten sind bevorzugt zumindest teilweise auf einer Elektronikkarte angeordnet. Somit wird die Elektronikkarte von dem Hotmelt umgeben.

Die Bauteile weisen bevorzugt Leitungen auf. Während die Elektronikkomponenten von dem Hotmelt umgeben sind, bleibt ein Leitungsbereich frei von Hotmelt.

Die Bauteile weisen bevorzugt Befestigungsmittel für den Sensor auf. Diese Befestigungsmittel werden nicht von Hotmelt umgeben und sind an dem zweiten Gehäuseteil von außen zugänglich, um sie bei der Montage nutzen zu können. Bei den Befestigungsmitteln handelt es sich vorzugsweise um ein drehbares Klemmteil zum Verkeilen in einer Nut.

Das Gehäuse ist bevorzugt zylindrisch. Damit passt die Gehäuseform zu der Innengeometrie einer Nut, beispielsweise eines Arbeitszylinders. Die Führungsnuten können verschiedene Querschnitte aufweisen, etwa als C-Nut oder als T-Nut, so dass auch passende unterschiedliche Grundflächen der Gehäuse denkbar sind, etwa eine kreisförmige Grundfläche oder ein Rechteck, wobei dann die Ober- und Unterseiten vorzugsweise verrundet sind.

Der Sensor weist einen Durchmesser von höchstens 5 mm, insbesondere höchstens 3 mm auf. Dieser Durchmesser bezieht sich insbesondere auf die Grundfläche eines zylindrischen Gehäuses. Sensoren mit derart kleinen Abmessungen können gut in Nuten von Arbeitszylindern eingesetzt werden. Das erfindungsgemäße Schutzkonzept mit Hotmelt und zweiteiligem Außengehäuse ist im Gegensatz zu den bekannten Vorgehensweisen auch für derart kleine Sensoren geeignet.

Der Sensor ist vorzugsweise als magnetischer oder induktiver Sensor ausgebildet. Bei entsprechendem zylindrischem Gehäuse handelt es sich demnach um einen magnetischen oder induktiven Zylindersensor. Wie schon mehrfach erwähnt, werden solche Sensoren häufig an einem Gehäuse eines Arbeitszylinders angeordnet und haben sich zur genauen Positionsbestimmung durch berührungsloses Erfassen der Stellung beispielsweise von Pneumatik- oder Hydraulikkolben innerhalb des Arbeitszylinders bewährt. Der Sensor wird in zunächst axial verstellbar in eine Führungsnut eingesetzt und nach Justierung dort arretiert. Ein derart justierter und befestigter Sensor gibt in Abhängigkeit der Kolbenstellung ein Schaltsignal aus. Häufig sind pro Hubweg eines Kolbens mehrere Schaltpunkte gewünscht. Zumeist sind die eingefahrene Endlage und die ausgefahrene Endlage des Kolbens zu erfassen.

Das erste Gehäuseteil und/oder das zweite Gehäuseteil weisen bevorzugt einen spritzgussfähigen Kunststoff, insbesondere einem Thermoplast auf. Hier handelt es sich also nicht um ein Hotmelt, sondern einen herkömmlichen Kunststoff. Ein Gehäuseteil aus einem solchen Kunststoff ist somit fest, robust und bei üblichen Temperaturen, wie sie im Betrieb auftreten können, nicht verformbar.

Das erste Gehäuseteil und das zweite Gehäuseteil bestehen vorzugsweise aus dem gleichen Kunststoff. Damit verbinden sich die beiden Gehäuseteile besonders gut miteinander. Es sei nochmals wiederholt, dass das erste Gehäuseteil bereits von Anfang an fest, also beispielsweise in einem vorgelagerten Spritzgussverfahren hergestellt ist. Das zweite Gehäuseteil ist nachträglich an dem ersten Gehäuseteil angebracht, insbesondere angespritzt, nachdem der Vorspritzling aus Elektronikkomponenten im Hotmelt bereits darin eingesetzt ist.

Das erfindungsgemäße Herstellungsverfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen auch hinsichtlich von Merkmalen beschrieben, die durch zusätzliche Merkmale des Herstellungsverfahrens realisiert werden können.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Elektronikkarte mit Elektronikkomponenten eines Sensors;
- Fig. 2: die Elektronikkarte gemäß Figur 1 nach Umspritzen mit einem Hotmelt;
- Fig. 3: den durch das Umspritzen gemäß Figur 2 entstandenen Vorspritzling, der in ein erstes Gehäuseteil eingesetzt ist;
- Fig. 4: den fertigen Sensor nach Anspritzen eines zweiten Gehäuseteils; und
- Fig. 5: nochmals den fertigen Sensor in einer dreidimensionalen Ansicht.

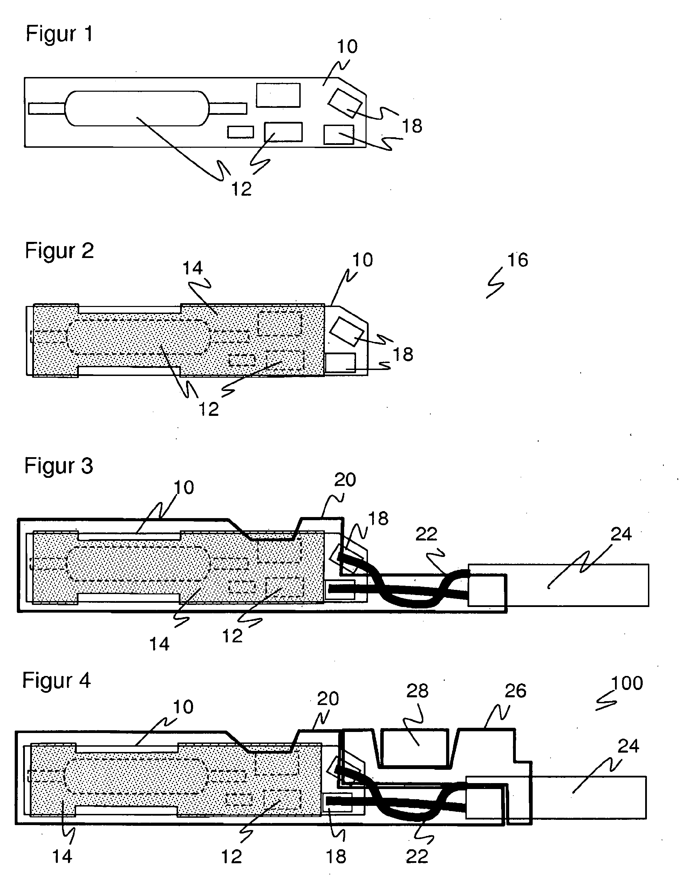

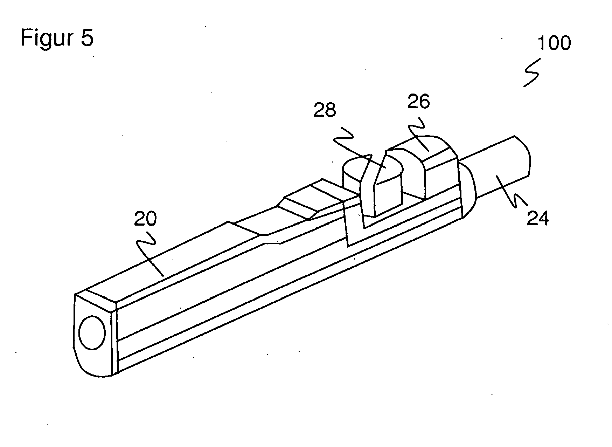

Die Herstellung eines Sensors und der daraus entstehende Sensor wird unter Bezugnahme auf die Figuren 1 bis 5 beschrieben. Dabei zeigen die Figuren 1 bis 4 das Ergebnis nach verschiedenen Schritten während der Herstellung, während Figur 5 den fertigen Sensor noch einmal in einer dreidimensionalen Ansicht darstellt.

Figur 1 zeigt zunächst eine Elektronikkarte 10, die mit diversen Elektronikkomponenten 12 bestückt ist. Da die Funktionsweise eines Sensors, insbesondere eines magnetischen oder induktiven Sensors, an sich bekannt ist, werden die Elektronikkomponenten 12 nicht näher erläutert und sind rein beispielhaft zu verstehen.

Die Elektronikkarte 10 mit ihren Elektronikkomponenten 12 wird zunächst mit einem schraffiert dargestellten Hotmelt 14 umspritzt. Die von dem Hotmelt 14 umgebene Elektronikkarte 10 wird als Vorspritzling 16 bezeichnet, obwohl das Hotmelt 14 selbst in den weiteren Prozessschritten nicht mehr oder allenfalls partiell umspritzt wird. Wie in Figur 2 zu erkennen, bleiben Anschlussbereiche 18 der Elektronikkarte 10 frei von Hotmelt 14. Der Vorspritzling 16 bildet einen durch das Hotmelt 14 geschützten ersten Sensorteil.

In einem weiteren Herstellungsschritt wird wie in Figur 3 gezeigt der Vorspritzling 16 in ein erstes Gehäuseteil 20 eingesetzt. Das erste Gehäuseteil 20 kann durch ein Spritzgussverfahren aus einem hochfesten thermoplastischen Kunststoff hergestellt sein. Es wird aber nicht durch Umspritzen des Hotmelts 14 hergestellt, sondern ist zu dem Zeitpunkt, in dem der Vorspritzling 16 eingesetzt wird, bereits fertig und fest. Dadurch bleibt das Hotmelt 14 unbeschädigt.

Wie in Figur 3 ebenfalls zu erkennen, weist der Sensor außer der Elektronikkarte 10 noch weitere Bauteile auf. Dazu zählen Einzelleiter 22, welche die Elektronikkarte 10 mit einer Leitung 24 zur Versorgung des Sensors und zur Ausgabe von Detektionsergebnissen verbinden, beispielsweise Schalterereignissen. Die Einzelleiter 22 sind mit den Anschlussbereichen 18 der Elektronikkarte 10 verbunden. Diese weiteren Bauteile 22 bilden zusammen einen zweiten Sensorteil, sind nicht von dem Hotmelt 14 umgeben und werden durch das an dieser Seite noch offene erste Gehäuseteil 20 auch allenfalls teilweise umgeben und geschützt.

Figur 4 zeigt das Ergebnis eines abschließenden Herstellungsschrittes, bei dem die Bauteile 22 mit einem zweiten Gehäuseteil 26 für den hinteren Bereich oder das Kabelende des Sensors umspritzt werden. Da das zweite Gehäuseteil 26 allenfalls partiell mit dem Hotmelt 14 in Kontakt kommt, entstehen keine unerwünschten Beeinträchtigungen des Hotmelts 14. Zugleich schützt das Hotmelt 14 die Elektronikarte 10 und deren Elektronikkomponenten vor nachteiligen Effekten bei der Herstellung des zweiten Gehäuseteils 26, etwa vor zu großen Druck- oder Temperaturbelastungen. Das zweite Gehäuseteil 26 bildet mit dem ersten Gehäuseteil 20 zusammen ein gemeinsames Gehäuse, welches nun sämtliche zu schützenden Sensorkomponenten umgibt. Dabei bleiben keine Leckagen oder Öffnungen, durch die das Hotmelt 14 noch mit kritischen Substanzen oder anderen beeinträchtigenden Effekten in Berührung kommen könnte. Vorzugsweise wird für das Spritzverfahren zur Herstellung des zweiten Gehäuseteils 26 der gleiche Kunststoff verwendet, aus dem auch das erste Gehäuseteil 20 besteht, um für einen besonders guten Verbund zu sorgen.

Als weiteres Beispiel für Bauteile des zweiten Sensorteils, die nach dem Umspritzen zumindest teilweise von dem zweiten Gehäuseteil umgeben sind, zeigt Figur 4 ein Befestigungselement 28 in Form eines drehbaren Klemmteils, mit dem der Sensor in einer Führungsnut verkeilt werden kann, wie dies an sich beispielsweise aus der einleitend genannten EP 2 068 127 B1 bekannt ist.

Der fertige Sensor 100 ist in Figur 5 nochmals in einer dreidimensionalen Ansicht dargestellt. Dabei sind naturgemäß nur noch die äußeren Elemente, nämlich die Gehäuseteile 20, 26 sowie das von außen bedienbare Klemmteil 28 und die Leitung 24 erkennbar. Der Sensor 100 ist vorzugsweise ein magnetischer oder induktiver Sensor mit einem zumindest als Hüllkörper beziehungsweise von der Unterseite gesehen zylindrischen Gehäuse 20, 26 zum Einsetzen in eine Führungsnut. Der Durchmesser des Sensors 100 ist für die Anwendung in einer Führungsnut eines Arbeitszylinders sehr klein und beträgt beispielsweise nur einige Millimeter.

## Patentansprüche

1. Sensor (100) mit Elektronikkomponenten (12), die zumindest teilweise von einem Hotmelt (14) umgeben sind, wobei ein von den Elektronikkomponenten (12) und dem Hotmelt (14) gebildeter Vorspritzling (16) in einem ersten Gehäuseteil (20) angeordnet ist,
**dadurch gekennzeichnet,**
**dass** der Sensor (100) weitere, mit den Elektronikkomponenten (10) mindestens mittelbar verbundene Bauteile (22, 24, 28) aufweist, die nicht oder nur teilweise von dem Hotmelt (18) umgeben sind, dass der Vorspritzling (16) in dem ersten Gehäuseteil (20) nur eingesetzt ist und dass mit dem ersten Gehäuseteil (20) ein zweites Gehäuseteil (26) für die Bauteile (22, 28) verbunden ist, so dass erster Gehäuseteil (20) und zweiter Gehäuseteil (26) ein gemeinsames Gehäuse (20, 26) für den Sensor (100) bilden.

2. Sensor (100) nach Anspruch 1,
wobei die Elektronikkomponenten (12) zumindest teilweise auf einer Elektronikkarte (10) angeordnet sind.

3. Sensor (100) nach Anspruch 1 oder 2,
wobei die Bauteile (22, 24, 28) Leitungen (22, 24) aufweisen.

4. Sensor (100) nach einem der vorhergehenden Ansprüche,
wobei die Bauteile (22, 24, 28) Befestigungsmittel (28) für den Sensor (100) aufweisen, insbesondere ein drehbares Klemmteil zum Verkeilen in einer Nut.

5. Sensor (100) nach einem der vorhergehenden Ansprüche,
wobei das Gehäuse (20, 26) zylindrisch ist.

6. Sensor (100) nach einem der vorhergehenden Ansprüche,
der einen Durchmesser von höchstens 5 mm, insbesondere höchstens 3 mm aufweist.

7. Sensor (100) nach einem der vorhergehenden Ansprüche,
der als magnetischer oder induktiver Sensor (100) ausgebildet ist.

8. Sensor (100) nach einem der vorhergehenden Ansprüche,
wobei das erste Gehäuseteil (20) und/oder das zweite Gehäuseteil (26) einen spritzgussfähigen Kunststoff, insbesondere einem Thermoplast aufweist.

9. Sensor (100) nach einem der vorhergehenden Ansprüche,
wobei das erste Gehäuseteil (20) und das zweite Gehäuseteil (26) aus dem gleichen Kunststoff bestehen.

10. Verfahren zu Herstellung eines Sensors (100), insbesondere eines Sensors (100) nach einem der vorhergehenden Ansprüche, wobei Elektronikkomponenten (12) des Sensors (100) mit einem Hotmelt (14) umspritzt werden und der aus den Elektronikkomponenten (12) und dem umgebenden Hotmelt (14) entstehende Vorspritzling (16) anschließend in ein erstes Gehäuseteil (20) eingeschoben wird,
**dadurch gekennzeichnet,**
**dass** an das erste Gehäuseteil (20), nachdem der Vorspritzling (16) eingeschoben ist, ein zweites Gehäuseteil (26), das mit dem ersten Gehäuseteil (20) verbunden ist, in einem Spritzprozess hergestellt wird, um aus dem.ersten Gehäuseteil (20) und dem zweiten Gehäuseteil (26) ein gemeinsames Gehäuse (20, 26) für die Elektronikkomponenten (12) und mit den Elektronikkomponenten (12) verbundene weitere Bauteile (22, 24, 28) des Sensors (100) herzustellen.

## Claims

1. A sensor (100) having electronic components (12) being at least partially enclosed by a hotmelt (14), wherein a premoulded part (16) formed from the electronic components (12) and the hotmelt (14) is arranged in a first housing part (20),
**characterized in that** the sensor (100) comprises additional components (22, 24, 28) at least indirectly connected with the electronic components (12) which are not or only partially enclosed by the hotmelt (14), **in that** the premoulded part (16) is merely inserted into the first housing part (20) and **in that** a second housing part (26) for the components (22, 28) is connected to the first housing part (20) so that first housing part (20) and second housing part (26) form a common housing (20, 26) for the sensor (100).

2. The sensor (100) according to claim 1,
wherein the electronic components (12) are at least partially arranged on an electronic board (10).

3. The sensor (100) according to claim 1 or 2,
wherein the components (22, 24, 28) comprise lines (22, 24).

4. The sensor (100) according to any of the preceding claims,
wherein the components (22, 24, 28) comprise mounting means (28) for the sensor (100), in particular a rotatable clamping part for wedging in a notch.

5. The sensor (100) according to any of the preceding claims,
wherein the housing (20, 26) is cylindrical.

6. The sensor (100) according to any of the preceding claims,
having a diameter of at most 5 mm, in particular at most 3 mm.

7. The sensor (100) according to any of the preceding claims,
the sensor (100) being configured as a magnetic or inductive sensor (100).

8. The sensor (100) according to any of the preceding claims,
wherein the first housing part (20) and/or the second housing part (26) comprises an injection-mouldable plastic, in particular a thermoplast.

9. The sensor (100) according to any of the preceding claims,
wherein first housing part (20) and second housing part (26) are made from the same plastic.

10. A method for manufacturing a sensor (100), in particular a sensor (100) according to one of the preceding claims, wherein electronic components (12) of the sensor (100) are insert-moulded with a hotmelt (14), and wherein the premoulded part (16) produced from the electronic components (12) and the enclosing hotmelt (14) subsequently is inserted into a first housing part (20), **characterized in that** at the first housing part (20), after the premoulded part (16) has been inserted, a second housing part (26) connected to the first housing part (20) is made in a moulding process to make a common housing (20, 26) from the first housing part (20) and the second housing part (26) for the electronic components (12) and additional components (22, 24, 28) of the sensor (100) connected to the electronic components (12)

## Revendications

1. Capteur (100) comprenant des composants électroniques (12) qui sont au moins partiellement entourés d'une colle thermofusible (14), dans lequel une ébauche injectée (16) formée par les composants électroniques (12) et la colle thermofusible (14) est agencée dans une première partie de boîtier (20),
**caractérisé en ce que**
le capteur (100) comprend d'autres composants (22, 24, 28) reliés au moins indirectement aux composants électroniques (10), qui ne sont pas entourés par la colle thermofusible (18) ou ne le sont que partiellement, **en ce que** l'ébauche (16) est seulement mise en place dans la première partie de boîtier (20), et **en ce qu'**une seconde partie de boîtier (26) pour les composants (22, 28) est reliée à la première partie de boîtier (20) de telle façon que la première partie de boîtier (20) et la seconde partie de boîtier (26) forment un boîtier commun (20, 26) pour le capteur (100).

2. Capteur (100) selon la revendication 1,
dans lequel les composants électroniques (12) sont agencés au moins partiellement sur une carte électronique (10).

3. Capteur (100) selon la revendication 1 ou 2,
dans lequel les composants (22, 24, 28) comprennent des lignes (22,24).

4. Capteur (100) selon l'une des revendications précédentes,
dans lequel les composants (22, 24, 28) comprennent des moyens de fixation (28) pour le capteur (100), en particulier un organe de coincement rotatif pour le coincement dans une rainure.

5. Capteur (100) selon l'une des revendications précédentes,
dans lequel le boîtier (20, 26) est cylindrique.

6. Capteur (100) selon l'une des revendications précédentes,
qui présente un diamètre au maximum de 5 mm, en particulier au maximum de 3 mm.

7. Capteur (100) selon l'une des revendications précédentes,
qui est réalisé sous forme de capteur magnétique ou inductif (100).

8. Capteur (100) selon l'une des revendications précédentes,
dans lequel la première partie de boîtier (20) et/ou la seconde partie de boîtier (26) comporte une matière plastique capable d'être moulée par injection, en particulier une matière thermoplastique.

9. Capteur (100) selon l'une des revendications précédentes,
dans lequel la première partie de boîtier (20) et la seconde partie de boîtier (26) sont de la même matière plastique.

10. Procédé pour la fabrication d'un capteur (100), en particulier d'un capteur (100) selon l'une des revendications précédentes, dans lequel des composants électroniques (12) du capteur (100) sont enrobés d'une colle thermofusible (14) et l'ébauche injectée résultant des composants électroniques (12) et de la colle thermofusible (14) qui les enrobe est ensuite enfilée dans une première partie de boîtier (20),
**caractérisé en ce que**
après avoir enfilé l'ébauche (16), on réalise dans une procédure d'injection sur la première partie de boîtier (20), une seconde partie de boîtier (26) qui est reliée à la première partie de boîtier (20), afin de réaliser à partir de la première partie de boîtier (20) et de la seconde partie de boîtier (26) un boîtier commun (20, 26) pour les composants électroniques (12) et pour d'autres composants (22, 24, 28), reliés aux composants électroniques (12), du capteur (100).
